# EUROPEAN PATENT APPLICATION

(11) **EP 2 244 512 A1**
(43) Date of publication of application: **27.10.2010**
(21) Application number: 10004356.1
(22) Date of filing: 23.04.2010
(51) Int. Cl.: H04W 68/00, H04W 4/22

(54) **Method of handling validity of paging and related communication device**

(30) Priority: 23.04.2009 US 172210 P
(71) Applicant: HTC Corporation, Taoyuan County 330 (TW)
(72) Inventor: Chen, Te-Ming, Taoyuan City Taoyuan County 330 (TW); Jen, Yu-Chih, Taoyuan City Taoyuan County 330 (TW)
(74) Representative: Wagner, Karl H.

(57) **Abstract**

A method of handling validity of paging for a mobile device in a wireless communication system (10) is disclosed. The method of handling validity of paging comprises the steps of receiving a first identity from a network when the mobile device does not have a valid second identity used for reception of a paging message (302) and receiving the paging message from a network according to the first identity (304).

## Description

The present invention relates to a method and apparatus for handling validity of paging in a wireless communications system.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

To receive services, the UE needs to register with the network. During a registration procedure, the UE may first send an attach request to the core network (e.g. MME). The attach request includes an international mobile subscriber identity (IMSI), which is stored in a subscriber identity module (SIM) card inside the mobile device. Because the IMSI uniquely addresses each subscriber, it is seen as critical information from a security point of view and its transmission clearly has to be avoided as much as possible. By spying on and monitoring the IMSI, eavesdropper may track a subscriber's location, movement, and activities. So the core network allocates a temporary UE identity, for example a system architecture evolution (SAE) temporary mobile subscriber identity (S-TMSI), to the UE and renews it frequently in order to reduce the use of IMSI.

The UE in the LTE system can be operated in two radio resource control (RRC) states, which are RRC_IDLE state and RRC_CONNECTED state. In the RRC_CONNECTED, the network (e.g. E-UTRAN) allocates radio resource to the UE to facilitate the transfer of data via shared data channels (e.g. physical downlink shared channel). To support this operation, the UE in RRC_CONNECTED state monitors an associated control channel (e.g. physical downlink control channel) which is used to indicate the dynamic allocation of the shared transmission resources in time and frequency. An UE in RRC_IDLE state may monitor a paging channel to detect incoming calls, and also acquires system information.

A paging procedure is used by the E-UTRAN to transmit paging information to a UE in RRC_IDLE state, or inform UEs in RRC_IDLE state and UEs in RRC_CONNECTED state about a system information change and/or an Earthquake and Tsunami Warning System (ETWS) primary notification and/or ETWS secondary notification. In order to re-establish a connection toward a UE in RRC_IDLE state, the core network (e.g. MME) distributes a paging request to the relevant eNBs. When receiving the paging request, the eNB sends a page message over the radio interface in the cells. The paging request contains UE identity (e.g. IMSI or S-TMSI) index value in order for the eNB to calculate the paging occasions at which the UE will switch on its receiver to listen to the paging messages. The paging occasion is a subframe, where a Paging-Radio Network Temporary Identifier (P-RNTI) may be transmitted on a physical downlink control channel (PDCCH) addressing the paging message. To receive the paging message from the network, the UE in RRC_IDLE state monitors the PDCCH for the P-RNTI. The paging message may indicate a change of system information or provide ETWS notification. When receiving the paging message, the UE in RRC_IDLE state may check the UE identity (e.g. IMSI or S-TMSI) included in the paging message and see if the UE identity is matched with the one provided by the upper layer of the UE. Briefly, the UE only receives the paging message according to the IMSI and S-TMSI. However, problems may occur if the UE does not have a valid IMSI.

For example, a UE without a valid IMSI (e.g. the UE does not have a SIM card or the SIM card is invalid) would like to make an emergency call. During the emergency call, the connection may suddenly drop. In this situation, the network cannot reach the UE by paging since the UE does not have any valid IMSI. In addition, although the S-TMSI is another choice for the network to perform the paging, the network has to generate the S-TMSI based on the IMSI obtained from the UE. Without a valid IMSI, no valid S-TMSI can be generated and allocated to the UE. As a result, the network cannot page the UE having invalid IMSI. The emergency call fails due to the failure in the paging stage. This may put a subscriber in danger if the emergency call is made by a survivor in a car accident.

Simple to say, the network has no way to page the UE when the identity predetermined for the paging message transfer is invalid, thereby causing failure of emergency services.

This in mind, the present invention aims at providing a method and apparatus for handling validity of paging for a mobile device in a wireless communications system, so as to receive a paging message for emergency services when the mobile device does not have a valid international mobile subscriber identity (IMSI).

This is achieved by a method and apparatus for h handling validity of paging for a mobile device in a wireless communication system according to claims 1, 7 and 8. The dependent claims pertain to corresponding further developments and improvements.

As will be seen more clearly from the detailed description following below, the claimed method for handling validity of paging for a mobile device in a wireless communication system comprising the steps of receiving a first identity from a network when the mobile device does not have a valid second identity used for reception of a paging message and receiving the paging message from a network according to the first identity.

### Brief Description of the Drawings

FIG.1 illustrates a schematic diagram of an examplary wireless communication system.
FIG.2 illustrates a schematic diagram of an examplary communication device.
FIG.3 is a flow chart of an examplary process.
FIG.4 is a flow chart of an examplary process.

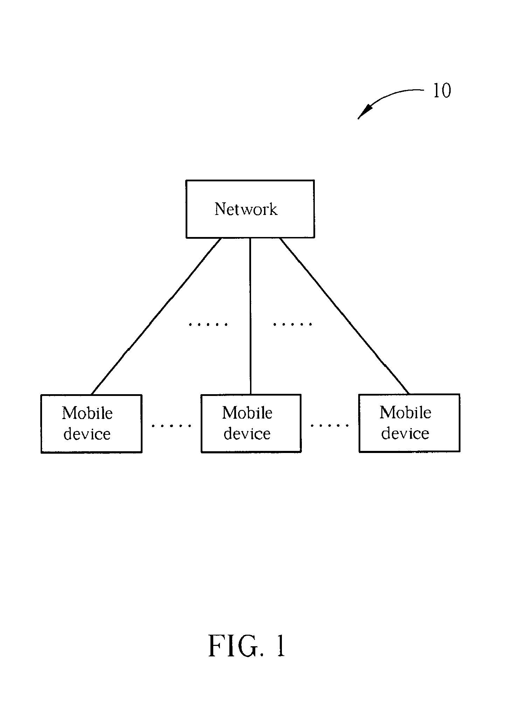

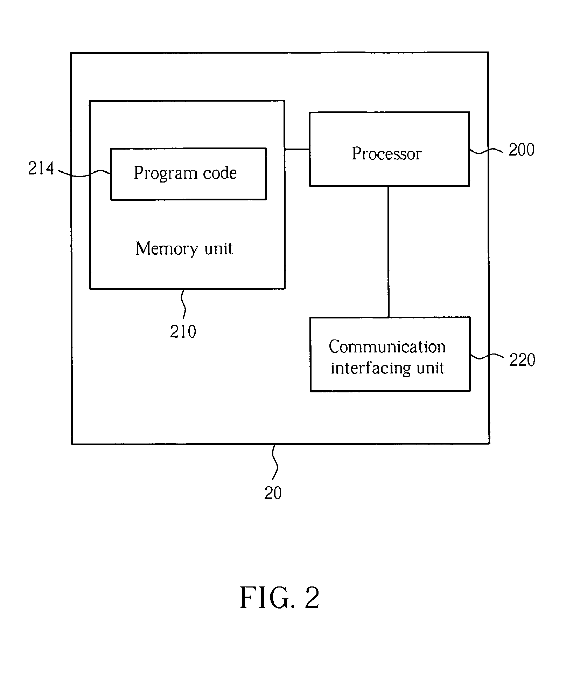

Please refer to FIG.1, which illustrates a schematic diagram of an examplary wireless communication system 10. Briefly, the wireless communication system 10 is composed of a network and a plurality of mobile devices. The wireless communication system 10 can be a UMTS (Universal Mobile Telecommunications System), an LTE (long-term evolution), LTE-Advance system or any other similar network system. In the LTE system, the network can be referred as a EUTRAN (evolved-UTRAN) comprising a plurality of eNBs or a core network entity (e.g. Mobility Management Entity called MME), whereas the mobile devices are referred as to user equipments (UEs). The UEs can be devices such as mobile phones, computer systems, etc. This terminology will be used throughout the application for ease of reference, however, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver. Please refer to FIG.2, which illustrates a schematic diagram of an examplary communication device 20. The communication device 20 may be the mobile devices or the network shown in FIG. 1 and may include a processor 200 such as a microprocessor or ASIC, a memory unit 210 and a communication interfacing unit 220. The memory unit 210 may be any data storage device that can store program code 214 for access by the processor 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 may be preferably a radio transceiver and accordingly exchanges wireless signals according to processing results of the processor 200.

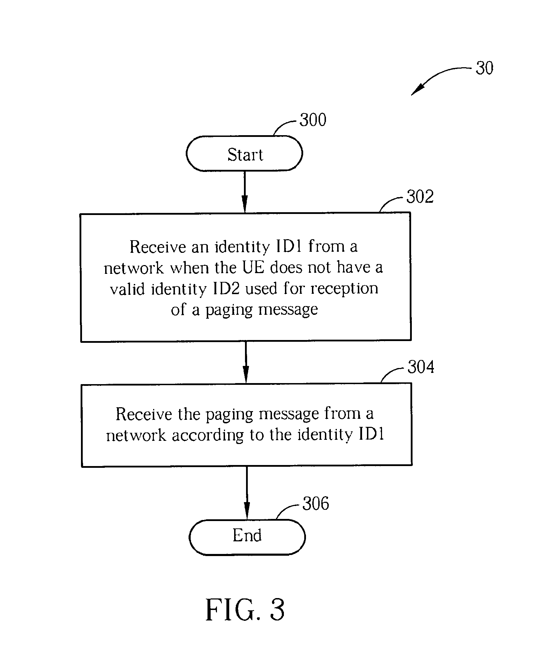

Please refer to FIG.3, which is a flow chart of an examplary process 30. The process 30 is used for handling validity of paging for a UE in a wireless communication system. The process 30 may be compiled into the program code 214 and include the following steps:
Step 300: Start.
Step 302: Receive an identity ID1 from a network when the UE does not have a valid identity ID2 used for reception of a paging message.
Step 304: Receive the paging message from a network according to the identity ID1.
Step 306: End.

According to the process 30, the UE may receive the identity ID1 from the network when the UE does not have the valid identity ID2 that is used for reception of the paging message. The paging message could be sent by the network for the purpose of emergency services. In some example, the identity ID2 is predetermined for use of page message reception in both the UE and the network and may be an international mobile subscriber identity (IMSI), which is stored in a subscriber identity module (SIM) card inside the UE. In this situation, two possible scenarios could cause the UE to have an invalid identity ID2. In the first scenario, the UE has no SIM card inserted, meaning that no identity ID2 exists in the UE. In the second scenario, the UE has a SIM card inserted, but the SIM card is invalid since a subscriber may not pay the bill or a subscriber may report a stolen phone corresponding to the identity ID2. In Step 304, the UE receives the paging message from the network according to the identity ID1 since the identity ID2 is invalid. The identity ID1 is assigned by the network for reception of the paging message when no valid identity ID2 exists in the UE. Through the process 30, the UE can receive a new identity (i.e. ID1) from the network to receive the paging message if the UE does not have a valid identity predetermined for the paging use (i.e. ID2).

In some examples, the UE may request the network for the identity ID1 by sending a request message or initiating a definable procedure. Preferably, the definable procedure could be an attach procedure and the identity ID1 could be a temporary identity, for example, a SAE temporary mobile subscriber identity (S-TMSI), or the identity ID1 could be a random number generated by the UE itself. In the case that the identity ID1 is the S-TMSI, the network generates the identity ID1 according to information provided by the UE in the request message. The information could be an international mobile equipment identity (IMEI).The request message could be an "EMERGENCY ATTACH REQUEST" message, "SERVICE REQUEST" message or "TRACKING AREA UPDATE REQUEST" message. For example, the UE updates the network as to a new location of the UE whenever the UE moves out of its current tracking area (TA). This procedure is called a "tracking area update". During the tracking area update, the UE may send the "TRACKING AREA UPDATE REQUEST" message to the network. The "TRACKING AREA UPDATE REQUEST" message includes information, such as the aforementioned IMEI and cause values. When the network gets the information provided from the UE, the network generates an S-TMSI and sends the generated S-TMSI along with the "Tracking area update accept" message. In some examples, the UE sends the "SERVICE REQUEST" message to the network when making a voice call. After receiving the "SERVICE REQUEST" message, the network may assign the S-TMSI to the UE. In some examples, the UE sends an "EMERGENCY ATTACH REQUEST" message to trigger an emergency attach procedure. After receiving the "EMERGENCY ATTACH REQUEST" message, the network may assign the S-TMSI to the UE. For some emergency reasons, a UE subscriber may need to make an emergency call with the UE that no longer have a valid IMSI (e.g. the SIM card is lost). During the emergency call, the connection may drop suddenly. In order to reconnect the UE, the network pages the UE using the S-TMSI that the UE received earlier. The UE receives the paging message according to the S-TMSI even if the UE does not have the valid IMSI.

In the cast that the identity ID1 is the random number generated by the UE, the request message could be an "RRCConnectionRequest" message. When the UE sends the "RRCConnectionRequest" message to establish an RRC connection, the random number is included in the "RRCConnectionRequest" message and sent to the network. Preferably, the random number is drawn in the range of 0...2⁴⁰-1. The network may set the S-TMSI to the random number and send the S-TMSI to the UE. Later, the UE can receive the paging message by using the S-TMSI.

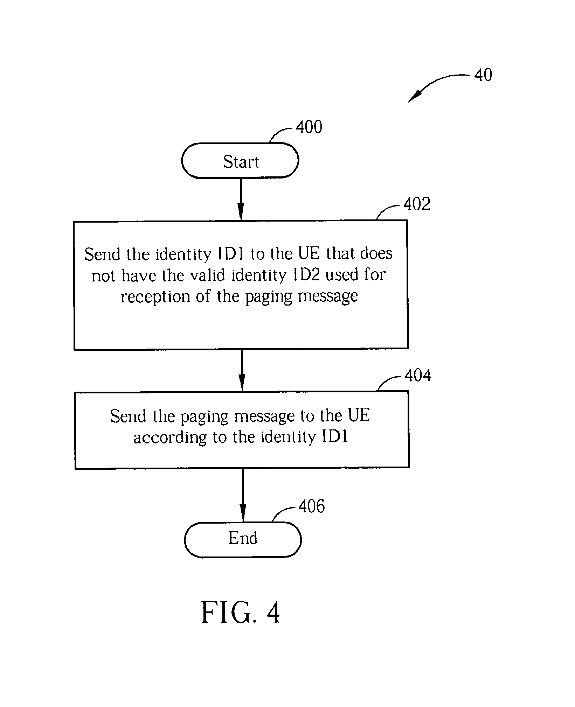

Please refer to FIG.4, which is a flow chart of an examplary process 40. The process 40 is used for handling validity of paging for a network in a wireless communication system. The process 40 corresponds to the process 30 and therefore the same elements use the same symbols. The process 40 may be compiled into the program code 214 and include the following steps:
Step 400: Start.
Step 402: Send the identity ID1 to the UE that does not have the valid identity ID2 used for reception of the paging message.
Step 404: Send the paging message to the UE according to the identity ID1. Step 406: End.

According to the process 40, the network sends the identity ID1 to the UE without the valid identity ID2 when the UE triggers the aforementioned definable procedure or sends the aforementioned request message to request the network for the identity ID1. As mentioned above, the procedure could be the attach procedure, the identity ID2 could be the IMSI, and the identity ID1 could be the S-TMSI or the aforementioned random number. The request message could be an "EMERGENCY ATTACH REQUEST" message, "SERVICE REQUEST" message or "TRACKING AREA UPDATE REQUEST" message. Then, the network sends the paging message to the UE according to the identity ID1 when the emergency service is needed. Thus, the UE without the valid identity ID2 receives the paging message from the network according to the identity ID1. The network and the UE both perform the paging message transfer according to the identity ID1, solving the problem due to no valid IMSI.

Since the process 40 corresponds to the process 30. The detail description of the process 40 can be found above and thus omitted herein.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes, the processed results of which can handle validity of paging for the communication device 20.

To sum up, in the abovementioned example, when the UE does not have a valid IMSI that is the only identity predetermined for the paging message reception, the UE may trigger the attach procedure or send the request message to request a temporary identity from the network. Accordingly, the network sends the temporary identity to the UE without valid IMSI. When the network has to page the UE for emergency service, the UE can receive the paging message according to the received temporary identity. Consequently, the UE can receive the paging message for the emergency service even if the UE does not have the valid IMSI.

## Claims

1. A method of handling validity of paging for a mobile device in a wireless communication system (10), **characterized by**, the method comprises the steps of:
receiving a first identity from a network when the mobile device does not have a valid second identity used for reception of a paging message (302); and
receiving the paging message from the network according to the first identity (304).

2. The method of claim 1 further comprising:
sending a request message for requesting the first identity from the network.

3. The method of claim 2, **characterized in that** the first identity is a temporary identity when the request message is an "EMERGENCY ATTACH REQUEST" message, "SERVICE REQUEST" message or "TRACKING AREA UPDATE REQUEST" message or is a random number that is generated by the mobile device and sent to the network when the request message is a "RRCConnectionRequest" message.

4. The method of claim 1 further comprising performing an emergency call service via the paging message.

5. The method of claim 1, **characterized in that** the second identity is an international mobile subscriber identity, hereinafter called IMSI.

6. The method of claim 1, **characterized in that** the step of receiving the first identity from the network when the mobile device does not have the valid second identity used for the reception of the paging message is receiving the first identity from the network when the mobile device does not have any second identity or the second identity is invalid.

7. A method of handling validity of paging for a network in a wireless communication system (10), **characterized by**, the method comprises the steps of:
sending a first identity to a mobile device that does not have a valid second identity used for reception of a paging message (402); and
sending the paging message to the mobile device according to the first identity (404).

8. A communication device (20) for handling validity of paging in a wireless communication system (10), the communication device (20) comprises:
**characterized by**:
a means for receiving a first identity from a network when the mobile device does not have a valid second identity used for reception of a paging message;
and
a means for receiving the paging message from a network according to the first identity.

9. The communication device (20) of claim 8 further comprising:
a means for sending a request message for requesting the first identity from the network.

10. The communication device (20) of claim 9, **characterized in that** the first identity is a temporary identity when the request message is an "EMERGENCY ATTACH REQUEST" message, "SERVICE REQUEST" message or "TRACKING AREA UPDATE REQUEST" message or is a random number that is generated by the mobile device and sent to the network when the request message is a "RRCConnectionRequest" message.

11. The communication device (20) of claim 8 further comprising a means for performing an emergency call service via the paging message.

12. The communication device (20) of claim 8, **characterized in that** the second identity is an international mobile subscriber identity, hereinafter called IMSI.

13. The communication device (20) of claim 8, **characterized in that** the means for receiving the first identity from the network when the mobile device does not have the valid second identity used for the reception of the paging message comprises a means for receiving the first identity from the network when the mobile device does not have any second identity or is notified that the second identity sent to the network is invalid.
